# EUROPÄISCHE PATENTSCHRIFT

(11) **EP 0 309 698 B1**
(45) Veröffentlichungstag und Bekanntmachung des Hinweises auf die Patenterteilung: **13.01.1993**
(21) Anmeldenummer: 88112926.6
(22) Anmeldetag: 09.08.1988
(51) Int. Cl.: G11B 27/10, G11B 27/28

(54) **CD-Spieler mit einem Speicher**
CD player with a memory
Lecteur-CD avec une mémoire

(30) Priorität: 30.09.1987 DE 3732983
(43) Veröffentlichungstag der Anmeldung: 05.04.1989
(73) Patentinhaber: Deutsche Thomson-Brandt GmbH, 78003 Villingen-Schwenningen (DE)
(72) Erfinder: Baas, Dieter, D-7640 Kehl (DE); Kühn, Hans-Robert, D-7742 St. Georgen (DE)

(56) Entgegenhaltungen:
- EP-A- 0 181 020
- EP-A- 0 275 355
- PATENT ABSTRACTS OF JAPAN, Band 9, Nr. 157 (P-369)[1880], 2. Juli 1985, Seite 35 P 369; & JP-A-60 32 181 (SONY K.K.) 19-02-1985
- PATENT ABSTRACTS OF JAPAN, Band 11, Nr. 233 (P-600)[2680], 30. Juli 1987, Seite 137 P 600; & JP-A-62 46 478 (SHARP CORP.) 28-02-1987
- PATENT ABSTRACTS OF JAPAN, Band 11, Nr. 233 (P-600)[2680], 30. Juli 1987, Seite 137 P 600; & JP-A-62 46 479 (MATSUSHITA ELECTRIC IND. CO. LTD) 28-02-1987

## Beschreibung

Die Erfindung betrifft ein Verfahren zum Speichern des Inhaltsverzeichnisses einer CD-Platte in einem CD-Spieler mit einem Speicher mit A Speicherplätzen.

Welche Daten auf einer CD-Platte gespeichert sind und wie sie der CD-Spieler verarbeitet, ist in dem Aufsatz "Zusammenstellen eines CD-Programms" aus Funkschau Nr. 15, 18.07.1986 auf Seite 26 - 28 beschrieben.

Jede CD-Platte enthält ein Inhaltsverzeichnis, in dem Daten gespeichert sind, die Auskunft geben über die Anzahl der auf der Platte gespeicherten Programmblöcke, deren Anfangszeiten sowie über die Gesamtspieldauer der Platte. Die einzelnen Programmblöcke sind in der Regel Musikstücke, doch kann es sich z.B. auch um gesprochenen Text oder verschiedene Geräuschkulissen für die Vertonung von Filmen oder Dias handeln. Auf einer CD-Platte können bis zu 99 Programmblöcke abgespeichert sein, jedoch finden sich auf einer CD-Platte mit Musik meist nur 10 bis 20 verschiedene Musikstücke.

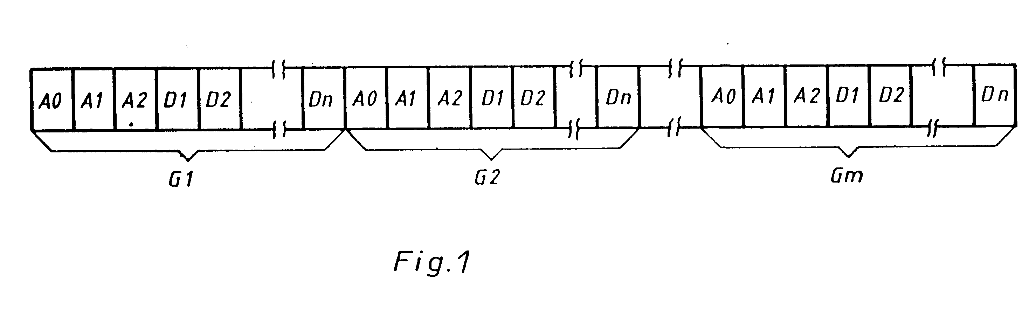

Das Inhaltsverzeichnis einer CD-Platte hat das in der Figur 1 dargestellte Datenformat. Im ersten Block AO steht der Titel des ersten Musikstücks, im zweiten Block A1 der des letzten Musikstücks, und im dritten Block A2 ist die Gesamtspieldauer der CD-Platte angegeben. In den folgenden Blöcken D1 bis Dn stehen die Startzeiten der einzelnen n Musikstücke, die auf der CD-Platte aufgezeichnet sind; die Blöcke A0, A1, A2, D1 bis Dn sind zu einer Gruppe zusammengefaßt, in der das Inhaltsverzeichnis der CD-Platte einmal vollständig gespeichert ist.

Der gesamte auf einer CD-Platte für das Inhaltsverzeichnis vorgesehene Speicherraum ist vollständig mit mehreren dieser unmittelbar aufeinanderfolgenden Gruppen belegt, so daß die Daten des Inhaltsverzeichnisses der CD-Platte mehrfach redundant abgespeichert sind.

Beim Spielen der CD-Platte dienen die Startzeitpunkte D1 bis Dn, die bei mehr als drei Musikstücken den größten Teil der im Inhaltsverzeichnis gespeicherten Daten ausmachen, zur Berechnung der Anfangszeiten der einzelnen Musikstücke.

Nach dem Einlegen einer CD-Platte in den CD-Spieler werden die einzelnen Titel des Inhaltsverzeichnisses in dem Speicher des CD-Spielers gespeichert. Meist reicht der vorhandene Speicherplatz für alle Titel aus. Es gibt jedoch auch CD-Platten mit mehr Titeln als im Speicher des CD-Spielers Platz finden. Wenn z.B. der CD-Spieler zehn Titel speichern kann, auf der eingelegten CD-Platte aber zwanzig Titel aufgezeichnet sind, so erhöhen sich die Zugriffszeiten auf einzelne Titel. Werden beispielsweise die ersten zehn Titel im Speicher des CD-Spielers gespeichert, so sind die Zugriffszeiten für diese Titel zwar gering, jedoch für die nicht gespeicherten restlichen zehn Titel unverhältnismäßig groß.

Aus der JP-A 06 32181 ist es bekannt, die Titel nur von Musikstücken zu speichern, die in vorgegebenen Abständen von einander auf der Platte aufgezeichnet sind, wenn auf der Platte mehr Titel aufgezeichnet sind, als im CD-Spieler Speicherplätze zur Verfügung stehen. Es wird dann z.B. nur jeder n-te Titel gespeichert.

Es ist daher Aufgabe der Erfindung, bei einem CD-Spieler die Zugriffszeiten zu verringern, wenn auf der CD-Platte mehr Titel aufgezeichnet sind als der Speicher des CD-Spielers fassen kann. Diese Aufgabe wird nach der Erfindung durch die im kennzeichnenden Teil jedes der unabhängigen Ansprüche 1 bis 4 angegebenen Maßnahmen in vorteilhafter Weise gelöst.

Es zeigen
Figur 2 und 3 ein erstes Ausführungsbeispiel
Figur 4 ein zweites Ausführungsbeispiel
Figur 5 ein drittes Ausführungsbeispiel der Erfinding.

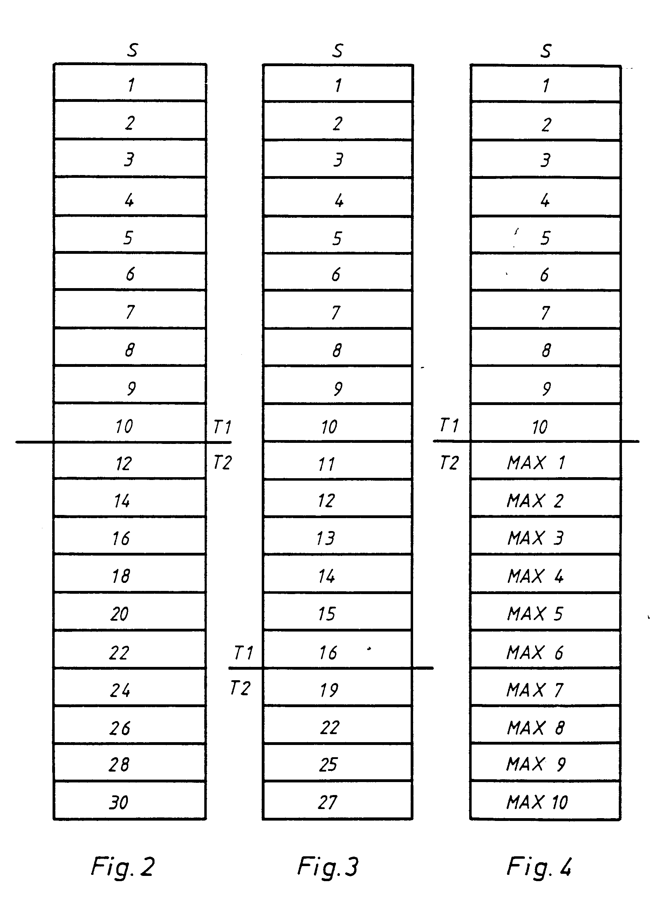

Anhand der Figuren 2 bis 5 wird nun die Erfindung beschrieben und erläutert.

Beim ersten Ausführungsbeispiel, das in Figur 2 dargestellt ist, möge der Speicher S des CD-Spielers beispielsweise A = 20 Speicherplätze haben, auf der eingelegten CD-Platte mögen aber C = 30 Titel aufgezeichnet sein. Der Speicher S ist nun in einen ersten Teil T1 mit B Speicherplätzen und einen zweiten Teil T2 mit A-B Speicherplätzen aufgeteilt. B sei beispielsweise zu zehn gewählt, so daß im ersten und im zweiten Teil T1 und T2 je zehn Speicherplätze zur Verfügung stehen. Es werden nun der Reihe nach im ersten Teil T1 die ersten zehn Titel 1 bis 10 der CD-Platte gespeichert. Von den restlichen zwanzig Titeln werden im zweiten Teil T2 nur jeder (C-B) / (A-9)-te = (30-10) / ( 20-10)-te = zweite Titel der Reihe noch gespeichert. Deshalb stehen in den Speicherplätzen des zweiten Teils T2 der Reihe nach die Titel 12, 14, 16 bis 30.

Weil durch diese Art des Speicherns die Zugriffszeiten für die Titel 11 bis 30 sich nur geringfügig erhöhen, werden für alle Titel annähernd gleiche Zugriffszeiten erzielt. Sehr kurze Zugriffszeiten für einen Teil der Titel einerseits und hohe Zugriffszeiten für den Rest der Titel andererseits treten nicht mehr auf.

Wenn z.B. A=20 und C=27 betragen und B zu 16 gewählt ist, so müßte jeder (27-16) / (20-16)-te = 11 / 4-te = 2,75-te Titel gespeichert werden. In solchen Fällen wird auf 3 aufgerundet, so daß im zweiten Teil T2 mit A-B = 20-16 = 4 Speicherplätzen die Titel 19, 22, 25 und 27 gespeichert werden, während im ersten Teil T1 der Reihe nach die Titel 1 bis 16 gespeichert werden. In Figur 3 ist die Belegung der Speicherplätze gezeigt.

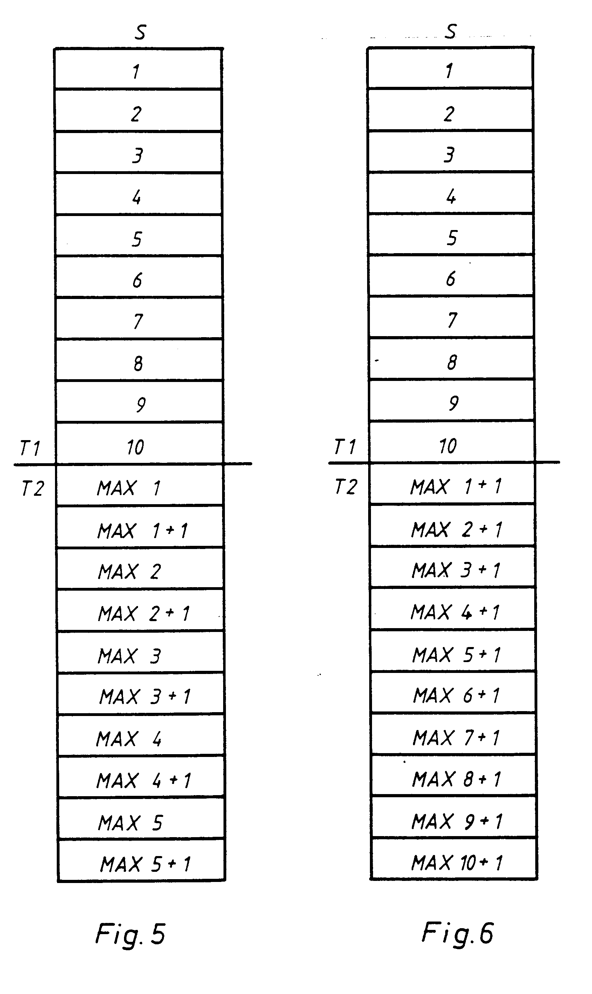

Beim zweiten Ausführungsbeispiel, das in Figur 4 abgebildet ist, habe der Speicher ebenfalls A = 20 Speicherplätze, die in B = 10 Speicherplätze für den ersten Teil T1 und A-B = 20-10 = 10 Speicherplätze für den zweiten Teil T2 aufgeteilt sind. Auf der eingelegten CD-Platte seien z.B. 32 Titel aufgezeichnet.

Wie beim ersten Ausführungsbeispiel werden die ersten zehn Speicherplätze des ersten Teils T1 der Reihe nach mit den Titeln 1 bis 10 belegt. Von den restlichen C-B = 32-10 = 22 Titeln werden nun die zehn längsten Titel MAX1 bis MAX10 gesucht und der Reihe nach im zweiten Teil T2 gespeichert. Die zehn Speicherplätze des ersten Teils T1 sind deshalb mit den Titeln 1 bis 10 belegt, während in den zehn Speicherplätzen des zweiten Teils T2 die zehn längsten Titel MAX1 bis MAX10 der restlichen 22 Titel stehen.

Wenn auf der CD-Platte Titel mit stark unterschiedlichen Längen - z.B. kurze und lange Titel - aufgezeichnet sind, so lassen sich mit dem zweiten Ausführungsbeispiel kürzere Zugriffszeiten als mit dem ersten Ausführungsbeispiel erzielen.

Beim dritten Ausführungsbeispiel, das in Figur 5 gezeigt ist, mögen die Parameter A, B und C dieselben Werte 20, 10 und 32 haben. Ebenso wie beim vorangehenden zweiten Ausführungsbeispiel werden die ersten zehn Titel 1 bis 10 in den zehn Speicherplätzen des ersten Teils T1 der Reihe nach abgelegt. Von den restlichen 22 Titeln werden im zweiten Teil des Speichers die fünf längsten Titel MAX1 bis MAX5 sowie deren Folgetitel MAX1 + 1, MAX2 + 1 bis MAX5 + 1 der Reihe nach gespeichert. Im zweiten Teil T2 des Speichers stehen deshalb die Titel MAX1, MAX1 + 1, MAX2, MAX2 + bis MAX5, MAX5 + ₁.

Auch das dritte Ausführungsbeispiel ist bei CD-Platten mit langen und kurzen Titeln besser geeignet als das erste, weil sich kürzere Zugriffszeiten erzielen lassen.

Bei einem vierten Ausführungsbeispiel, das Figur 6 zeigt, werden im zweiten Teil T2 des Speichers nicht die längsten Titel sondern nur die auf die längsten Titel folgenden Titel der Reihe nach abgelegt. Um bei dem Zahlenbeispiel des zweiten und dritten Ausführungsbeispieles zu bleiben, werden in den zehn Speicherplätzen des ersten Teils T1 die Titel 1 bis 10 der Reihe nach gespeichert. In die zehn Speicherplätze des zweiten Teils T2 werden nun nicht die zehn längsten Titel MAX1 bis MAX10 wie beim zweiten Ausführungsbeispiel, sondern nur die unmittelbar auf sie folgenden Titel MAX1 + ₁, MAX2 + 1, MAX3 + 1 bis MAX10 0 1 1 abgelegt. Auch diese Art der Speicherung ist für CD-Platten mit Titeln stark unterschiedlicher Längen besonders gut geeignet.

Besonders vorteilhaft ist es, die Einteilung des Speichers S in den ersten und zweiten Teil T1 und T2 in Abhängigkeit von der Gesamtzahl A der vorhandenen Speicherplätze und von der Anzahl C der auf einer CD-Platte aufgezeichneten Titel vorzunehmen. Der die Einteilung festlegende Parameter B kann z.B. mittels eines Mikroprozessors zu B = 2A-C + 1 für jede eingelegte CD-Platte berechnet werden. Mit dem so berechneten Parameter B werden sehr kurze Zugriffszeiten erzielt.

## Patentansprüche

1. Verfahren zum Speichern des Inhaltsverzeichnisses einer CD-Platte in einem CD-Spieler mit einem Speicher (S) mit A Speicherplätzen, wobei, wenn mehr Titel C im Inhaltsverzeichnis der CD-Platte stehen als im CD-Spieler Speicherplätze A zur Verfügung stehen, eine Verteilung der Titel über die Speicherplätze vorgenommen wird, dadurch gekennzeichnet, daß dabei der Speicher (S) in einen ersten Teil (T1) mit B > 1 und einen zweiten Teil (T2) mit A-B Speicherplätzen aufgeteilt wird, wobei im ersten Teil (T1) der Reihe nach die ersten B Titel des Inhaltsverzeichnisses gespeichert werden, und daß von den restlichen C-B Titeln des Inhaltsverzeichnisses, die nicht im ersten Teil (T1) gespeichert sind, A-B Titel im zweiten Teil (T2) derart gespeichert werden, daß die Abstände zwischen den einzelenen gespeicherten Titeln ungefähr gleich groß sind.

2. Verfahren zum Speichern des Inhaltsverzeichnisses einer CD-Platte in einem CD-Spieler mit einem Speicher (S) mit A Speicherplätzen, wobei, wenn mehr Titel C im Inhaltsverzeichnis der CD-Platte stehen als im CD-Spieler Speicherplätze A zur Verfügung stehen, eine Verteilung der Titel über die Speicherplätze vorgenommen wird, dadurch gekennzeichnet, daß dabei der Speicher (S) in einen ersten Teil (T1) mit B > 1 und einen zweiten Teil (T2) mit A-B Speicherplätzen aufgeteilt wird, wobei im ersten Teil (T1) der Reihe nach die ersten B Titel des Inhaltsverzeichnisses gespeichert werden, und daß von den restlichen C-B Titeln des Inhaltsverzeichnisses, die nicht im ersten Teil (T1) gespeichert sind, die A-B längsten Titel (MAX1, MAX2, ...) der Reihe nach mit dem längsten Titel (MAX1) beginnend im zweiten Teil (T2) gespeichert werden.

3. Verfahren zum Speichern des Inhaltsverzeichnisses einer CD-Platte in einem CD-Spieler mit einem Speicher (S) mit A Speicherplätzen, wobei, wenn mehr Titel C im Inhaltsverzeichnis der CD-Platte stehen als im CD-Spieler Speicherplätze A zur Verfügung stehen, eine Verteilung der Titel über die Speicherplätze vorgenommen wird, dadurch gekennzeichnet, daß dabei der Speicher (S) in einen ersten Teil (T1) mit B > 1 und einen zweiten Teil (T2) mit A-B Speicherplätzen aufgeteilt wird, wobei im ersten Teil (T1) der Reihe nach die ersten B Titel des Inhaltsverzeichnisses gespeichert werden, und daß von den restlichen C-B Titeln des Inhaltsverzeichnisses, die nicht im ersten Teil (T1) gespeichert sind, die (C-B)/2 längsten Titel (MAX1, MAX2, ...) mit jeweils dem unmittelbar folgenden Titel (MAX1 + 1, MAX2 + 1, ...) der Reihe nach mit dem längsten Titel (MAX1) beginnend im zweiten Teil (T2) gespeichert werden.

4. Verfahren zum Speichern des Inhaltsverzeichnisses einer CD-Platte in einem CD-Spieler mit einem Speicher (S) mit A Speicherplätzen, wobei, wenn mehr Titel C im Inhaltsverzeichnis der CD-Platte stehen als im CD-Spieler Speicherplätze A zur Verfügung stehen, eine Verteilung der Titel über die Speicherplätze vorgenommen wird, dadurch gekennzeichnet, daß dabei der Speicher (S) in einen ersten Teil (T1) mit B > 1 und einen zweiten Teil (T2) mit A-B Speicherplätzen aufgeteilt wird, wobei im ersten Teil (T1) der Reihe nach die ersten B Titel des Inhaltsverzeichnisses gespeichert werden, und daß von den restlichen C-B Titeln des Inhaltsverzeichnisses, die nicht im ersten Teil (T1) gespeichert sind, die unmittelbar auf die A-B längsten Titel (MAX1, MAX2, ...) folgenden A-B Titel (MAX1 + 1, MAX2 + 1 ,...) der Reihe nach mit dem auf den längsten Titel (MAX1) folgenden Titel (MAX1 + 1) beginnend im zweiten Teil (T2) gespeichert werden.

5. Verfahren nach Anspruch 1, dadurch gekennzeichnet, daß die restlichen C - B Titel des Inhaltsverzeichnisses, die nicht im ersten Teil (T1) gespeichert sind, im zweiten Teil (T2) derart gleichmäßig auf die A - B Speicherplätze des zweiten Teils (T2) verteilt werden, daß nur jeder (C-B)/(A-B)-te Titel gespeichert wird, wobei der Quotient (C-B)/(A-D) auf eine ganze Zahl gerundet wird, und daß der die Einteilung bestimmende Parameter B zu B = 2A-C + 1 berechnet wird, wobei A < C < 2A + 1.

## Claims

1. Method for the storage of the track directory of a compact disc in a CD player including a memory (S) having A storage positions, wherein, if more titles C are present in the track directory of the compact disc than there are storage positions A available in the CD player, a distribution of the titles over the storage positions is effected, characterised in that, for this, the memory (S) is divided into a first part (T1) having B > 1 and a second part (T2) having A - B storage positions, wherein the first B titles of the track directory are stored successively in the first part (T1) and that, of the remaining C - B titles of the track directory which are not stored in the first part (T1), A - B titles are stored in the second part (T2) in such a way that the spacings between the individually stored titles are approximately equally great.

2. Method for the storage of the track directory of a compact disc in a CD player including a memory (S) having A storage positions, wherein, if more titles C are present in the track directory of the compact disc than there are storage positions A available in the CD player, a distribution of the titles over the storage positions is effected, characterised in that, for this, the memory (S) is divided into a first part (T1) having B > 1 and a second part (T2) having A - B storage positions, wherein the first B titles of the track directory are stored successively in the first part (T1) and that, of the remaining C - B titles of the track directory which are not stored in the first part (T1), the A - B longest titles (MAX1, MAX2, ...) are stored successively in the second part (T2) beginning with the longest title (MAX1).

3. Method for the storage of the track directory of a compact disc in a CD player including a memory (S) having A storage positions, wherein, if more titles C are present in the track directory of the compact disc than there are storage positions A available in the CD player, a distribution of the titles over the storage positions is effected, characterised in that, for this, the memory (S) is divided into a first part (T1) having B > 1 and a second part (T2) having A - B storage positions, wherein the first B titles of the track directory are stored successively in the first part (T1) and that, of the remaining C - B titles of the track directory which are not stored in the first part (T1), the (C - B) / 2 longest titles (MAX1, MAX2, ...) with the respective immediately following title (MAX1 + 1, MAX2 + 1, ...) are stored successively in the second part (T2) beginning with the longest title (MAX1).

4. Method for the storage of the track directory of a compact disc in a CD player including a memory (S) having A storage positions, wherein, if more titles C are present in the track directory of the compact disc than there are storage positions A available in the CD player, a distribution of the titles over the storage positions is effected, characterised in that, for this, the memory (S) is divided into a first part (T1) having B > 1 and a second part (T2) having A - B storage positions, wherein the first B titles of the track directory are stored successively in the first part (T1) and that, of the remaining C - B titles of the track directory which are not stored in the first part (T1), the A - B titles (MAX1 + ₁, MAX2 + 1, ...) immediately following the A - B longest titles (MAX1, MAX2, ...) are stored successively in the second part (T2) beginning with the title (MAX1 + 1) following the longest title (MAX1).

5. Method according to Claim 1, characterised in that, the remaining C - B titles of the track directory which are not stored in the first part (T1), are evenly distributed in the second part (T2) over the A - B storage positions of the second part (T2) in such a way that only each (C - B) / (A - B)th title is stored, wherein the quotient (C - B) / (A - B) is rounded up to a whole number, and that the parameter B determining the distribution is calculated as B = 2A - C + 1 wherein A < C < 2A + 1.

## Revendications

1. Procédé pour la mise en mémoire de l'index d'un disque compact dans un lecteur de disques compacts avec une mémoire (S) avec A emplacements de mémoire telle que, lorsqu'il y a plus de titres C dans l'index du disque compact que d'adresses de mémoire A dans le lecteur de disques compacts, une répartition des titres est effectuée dans les adresses de mémoire, caractérisé en ce que la mémoire (S) est alors divisée en une première partie (T1) avec B > 1 adresses de mémoire et en une seconde partie (T2) avec A-B adresses de mémoire, les premiers titres B de l'index étant mis en mémoire dans l'ordre dans la première partie (T1), et que parmi les titres C-B de l'index qui restent, qui ne sont pas mémorisés dans la première partie (T1) des titres A-B sont mémorisés dans la seconde partie (T2) de telle manière que les écarts entre les différents titres mémorisés sont à peu près de la même grandeur.

2. Procédé pour la mise en mémoire de l'index d'un disque compact dans un lecteur de disques compacts avec une mémoire (S) avec A emplacements de mémoire telle que, lorsqu'il y a plus de titres C dans l'index du disque compact que d'adresses de mémoire A dans le lecteur de disques compacts, une répartition des titres est effectuée dans les adresses de mémoire, caractérisé en ce que la mémoire (S) est alors divisée en une première partie (T1) avec B > 1 adresses de mémoire et en une seconde partie (T2) avec A-B adresses de mémoire, les premiers titres B de l'index étant mis en mémoire dans l'ordre dans la première partie (T1), que parmi les titres C-B de l'index qui restent, qui ne sont pas mémorisés dans la première partie (T1), les titres les plus longs A-B (MAX1, MAX2, ...) sont mémorisés dans l'ordre dans la seconde partie (T2) en commençant par le titre le plus long (MAX1).

3. Procédé pour la mise en mémoire de l'index d'un disque compact dans un lecteur de disques compacts avec une mémoire (S) avec A emplacements de mémoire telle que, lorsqu'il y a plus de titres C dans l'index du disque compact que d'adresses de mémoire A dans le lecteur de disques compacts, une répartition des titres est effectuée dans les adresses de mémoire, caractérisé en ce que la mémoire (S) est alors divisée en une première partie (T1) avec B > 1 adresses de mémoire et en une seconde partie (T2) avec A-B adresses de mémoire, les premiers titres B de l'index étant mis en mémoire dans l'ordre dans la première partie (T1), que parmi les titres C-B de l'index qui restent, qui ne sont pas mémorisés dans la première partie (T1), les titres les plus longs (C-B)/2 (MAX1, MAX2, ...) sont mémorisés avec le titre qui suit respectivement (MAX1 + 1, MAX2 + ₁, ...) dans l'ordre dans la seconde partie (T2) en commençant par le titre le plus long (MAX1).

4. Procédé pour la mise en mémoire de l'index d'un disque compact dans un lecteur de disques compacts avec une mémoire (S) avec A emplacements de mémoire telle que, lorsqu'il y a plus de titres C dans l'index du disque compact que d'adresses de mémoire A dans le lecteur de disques compacts, une répartition des titres est effectuée dans les adresses de mémoire, caractérisé en ce que la mémoire (S) est alors divisée en une première partie (T1) avec B > 1 adresses de mémoire et en une seconde partie (T2) avec A-B adresses de mémoire, les premiers titres B de l'index étant mis en mémoire dans l'ordre dans la première partie (T1), que parmi les titres C-B de l'index qui restent, qui me sont pas mémorisés dans la première partie (T1), les titres A-B (MAX1 + 1, MAX2 + 1, ...) qui suivent directement les titres A-B les plus longs (MAX1, MAX2, ...) sont mémorisés dans l'ordre dans la seconde partie (T2) en commençant par le titre (MAX1 + 1) qui suit le titre le plus long (MAX1).

5. Procédé selon la revendication 1, caractérisé en ce que les titres C-B de l'index qui restent qui ne sont pas mémorisés dans la première partie (T1), sont répartis régulièrement dans la seconde partie (T2) dans les adresses de mémoire A-B de la seconde partie (T2) de manière tellement régulière que seulement chaque (C-B)/(A-B) -ième titre est mémorisé, le quotient (C-B)/(A-B) étant arrondi à un nombre entier et que le paramètre B qui définit la répartition est calculé avec B = 2A-C + 1, A < C < 2A + 1.
